# FASCICULE DE BREVET EUROPEEN

(11) **EP 4 284 686 B1**
(45) Date de publication et mention de la délivrance du brevet: **03.09.2025**
(21) Numéro de dépôt: 22701399.2
(22) Date de dépôt: 26.01.2022
(51) Int. Cl.: B60S 1/48, F16K 31/06

(54) **PROCÉDÉ DE NETTOYAGE DE SURFACES DE VÉHICULE AUTOMOBILE**
VERFAHREN ZUR REINIGUNG VON KRAFTFAHRZEUGOBERFLÄCHEN
METHOD FOR CLEANING MOTOR VEHICLE SURFACES

(30) Priorité: 01.02.2021 FR 2100927
(43) Date de publication de la demande: 06.12.2023
(73) Titulaire: VALEO SYSTEMES D'ESSUYAGE, 78322 Le Mesnil Saint Denis (FR)
(72) Inventeur: DOLLE, Yoann, 63500 Issoire (FR); THEBAULT, Denis, 63500 Issoire (FR); PERET, Adrien, 63500 Issoire (FR); BAUDOUIN, Maxime, 63500 Issoire (FR); GRASSO, Giuseppe, 63500 Issoire (FR)
(74) Mandataire: Valeo Visibility
(86) Numéro de dépôt international: PCT/EP2022/051685
(87) Numéro de publication internationale: WO 2022/161975

(56) Documents cités:
- EP-A1- 3 745 010
- WO-A1-2020/210450
- FR-A1- 3 097 826
- US-A1- 2021 268 995

## Description

### Domaine technique

L'invention concerne les dispositifs de nettoyage d'une surface de véhicule automobile destinés à être embarqués sur un véhicule automobile.

### Arrière-plan technique

De nombreuses surfaces, par exemple des capteurs de véhicules automobiles, peuvent faire l'objet de différents types de salissures. On peut par exemple citer les différentes caméras d'assistance à la conduite ou encore les capteurs de distance, les capteurs à ultrason, les radars, les lidars ou encore les capteurs de pluie placés sur le véhicule.

Or, ces salissures peuvent conduire à un dysfonctionnement de certains dispositifs ou à l'apparition de difficultés pour un utilisateur du véhicule (manque de visibilité à cause de salissures sur le pare-brise). Il est donc nécessaire de prévoir un dispositif de nettoyage de ces surfaces.

Classiquement, de tels dispositifs de nettoyage sont composés d'un réservoir dans lequel du liquide de nettoyage est stocké et d'un circuit de distribution fluidique composé de différentes canalisations ou tuyaux permettant d'acheminer le liquide de nettoyage vers au moins une buse de nettoyage placée devant une surface de manière à projeter du liquide de nettoyage sur cette dernière (il y a en règle générale plusieurs buses de nettoyage pour plusieurs surfaces).

Une pompe destinée à projeter du liquide de nettoyage dans le circuit de distribution fluidique jusqu'à la buse de nettoyage est généralement montée directement sur le réservoir. Plus précisément, un tube d'admission de liquide de la pompe est monté en force dans une ouverture ménagée dans le réservoir (un joint permet de garantir l'étanchéité de l'ensemble), l'orifice de sortie de liquide est quant à lui connecté au circuit de distribution fluidique.

Lorsque qu'un dysfonctionnement d'un capteur dû à la présence de salissures est détecté (de manière automatique par exemple) ou lorsqu'un utilisateur actionne une commande d'activation du dispositif de nettoyage, la pompe prélève du liquide de nettoyage dans le réservoir, le liquide étant à une pression similaire à la pression atmosphérique (la pression dépend de la hauteur de liquide de nettoyage dans le réservoir), et le propulse dans le circuit de distribution fluidique à une pression plus élevée (la différence de pression étant dépendante du dimensionnement de la pompe).

Le liquide de nettoyage pressurisé est projeté par la buse de nettoyage sur le capteur. WO-A-2020/193328 montre un procédé de nettoyage connu.

Cependant, de tels dispositifs peuvent présenter un inconvénient en termes de performance de nettoyage.

En effet, on observe l'apparition de pertes de charge en fonction de la distance entre la pompe et les buses de nettoyage. Cette distance varie en fonction du positionnement des buses de nettoyage sur le véhicule. Par conséquent, il est possible que le nettoyage d'une surface ne soit pas efficace du fait d'une pression trop faible du liquide de nettoyage en sortie de buse de nettoyage.

Il serait possible d'ajouter des pompes, par exemple autant qu'il y a de buses (voire même plusieurs réservoirs de liquide de nettoyage) et de les placer relativement proche des buses de nettoyage. Cependant, l'architecture qui résulterait de cette décision serait complexe et son coût de production et de maintenance seraient élevés.

L'invention a notamment pour but de fournir un procédé de nettoyage de surfaces de véhicule automobile permettant de remédier aux problèmes suivants, tant au niveau de la minimisation des pertes de charge que de la possibilité de mise en œuvre par un dispositif de nettoyage d'une architecture simple.

### Brève description de l'invention

A cet effet l'invention a pour objet un procédé de nettoyage de surfaces de véhicule automobile à l'aide d'un dispositif de nettoyage comprenant un réservoir de liquide de nettoyage, au moins une buse pour projeter le liquide de nettoyage, un circuit de distribution fluidique agencé pour acheminer du liquide de nettoyage du réservoir vers la buse de nettoyage et une pompe agencée pour injecter le liquide de nettoyage contenu dans le réservoir dans le circuit de distribution fluidique, le circuit de distribution fluidique comprenant un bloc de distribution de liquide de nettoyage relié fluidiquement à la pompe et comprenant plusieurs vannes ayant des débits sensiblement identiques, la buse étant reliée à plusieurs vannes du bloc de distribution, le procédé comprenant les étapes suivantes :
- commande de marche de la pompe pour injecter le liquide de nettoyage contenu dans le réservoir jusqu'au bloc de distribution,
- commande d'ouverture de plusieurs vannes reliées à la buse en fonction de la pression désirée en sortie de buse et lorsque la pression en entrée du bloc de distribution a atteint une pression prédéterminée, le nombre de vannes ouvertes étant fonction de la distance entre la buse reliée à plusieurs vannes et le bloc de distribution, et
- projection de liquide de nettoyage depuis la buse sur une surface à nettoyer.

Ainsi, on obtient un procédé dans lequel les pertes de charges sont limitées voire annulées. Tout d'abord, la présence de vannes sur le circuit de distribution fluidique permet de créer un palier intermédiaire permettant une activation en deux temps avec dans un premier temps une activation de la pompe puis une ouverture des vannes quand la pression en entrée du bloc de distribution est satisfaisante. On diminue donc la longueur de parcours du liquide de nettoyage sans obstacle et donc avec une perte de charge notable en créant un palier de compression.

De plus, et en répartissant le flux de liquide allant à la buse dans plusieurs vannes, le débit total en entrée du bloc de distribution est divisé par le nombre de vannes reliées à la buse. Les pertes de charge dans chaque vanne sont nettement inférieures à celles en cas d'utilisation d'une seule vanne. Il est donc possible d'ouvrir une partie des vannes reliées à une buse (plusieurs vannes) ou toutes ces vannes pour limiter les pertes de charges lors du passage du bloc de distribution. On limite encore plus les pertes de charge en faisant cela. Il est même possible de choisir la pression que l'on souhaite obtenir en sortie de buse en choisissant le nombre de vannes reliées à la buse à ouvrir.

Il est donc possible d'influer sur les pertes de charge et de manière plus générale sur la pression au niveau des buses de nettoyage en utilisant des composants standards.

Selon l'invention, le nombre de vannes ouvertes est fonction de la distance entre la buse reliée à plusieurs vannes et le bloc de distribution. Ainsi, plus une buse de nettoyage est éloignée du bloc de distribution et plus le nombre de vannes ouvertes pourrait être important pour s'assurer de pertes de charges les plus faibles possibles ;

Suivant d'autres caractéristiques optionnelles du système de nettoyage prises seules ou en combinaison :
- Le nombre de vannes ouvertes est fonction de la température environnante. Il est possible de compenser des pertes de charge plus importantes en cas de températures basses en ouvrant un nombre plus important de vannes reliées à une buse de nettoyage ;
- Toutes les vannes sont ouvertes lors de la commande d'ouverture des vannes reliées à la buse. On réduit ainsi au maximum les pertes de charge ;
- Le procédé de nettoyage comprend en outre les étapes suivantes :
   - activation de la pompe, les vannes étant fermées, et
   - ouverture des vannes.

On crée ainsi un palier de compression d'un segment du circuit de distribution fluidique situé entre la pompe et le bloc de distribution. On limite ainsi les pertes de charge ;
- Le dispositif de nettoyage comprend une unité de pilotage connectée au bloc de distribution et configurée pour commander l'ouverture et la fermeture de l'ensemble des vannes ;
- L'unité de pilotage commande l'ouverture d'un nombre de vannes différent en fonction de la pression désirée en sortie de buse de nettoyage ;
- Le dispositif de nettoyage comprend plusieurs buses, chaque buse étant reliée à un ensemble de vannes, le procédé comprenant une commande d'ouverture de plusieurs vannes de chaque ensemble de vannes après l'étape de commande de marche de la pompe pour injecter le liquide de nettoyage contenu dans le réservoir jusqu'au bloc de distribution ;
- Les vannes sont configurées pour avoir un débit métrique de sortie compris entre 0,12 et 0,15 m³/h ; et
- Les vannes sont des électrovannes.

### Brève description des dessins

L'invention sera mieux comprise à la lecture de la description qui va suivre donnée uniquement à titre d'exemple et faite en se référant aux dessins annexés dans lesquels :
La figure 1 est une représentation schématique d'une portion d'un dispositif de nettoyage selon l'invention, et
La figure 2 est une représentation graphique illustrant les pertes de charges lors du passage de liquide dans une ou plusieurs vannes en fonction du débit d'entrée dans la ou les vannes.

Les réalisations décrites en faisant référence aux figures sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres modes de réalisation.

Par « amont » ou « aval », on situe les éléments / équipements dans le sens de transport du flux de matière à traiter. Ainsi, un premier équipement ou élément, par exemple une pompe, est situé en amont d'un deuxième équipement ou élément si la matière est d'abord traitée par le premier puis le second équipement.

### Description détaillée

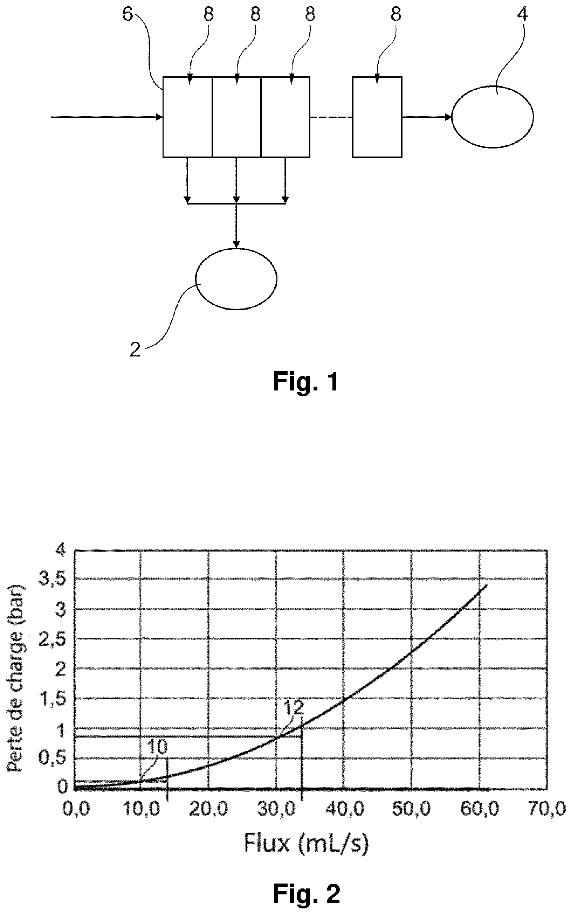

On se réfère désormais à la figure 1 illustrant une fraction d'un dispositif de nettoyage selon l'invention. Ce système de nettoyage a pour objectif de permettre le nettoyage de différentes surfaces du véhicule automobile comme par exemple des capteurs embarqués sur le véhicule ou encore le pare-brise ou la lunette arrière.

Un tel dispositif de nettoyage comprend un réservoir de liquide de nettoyage (non représenté sur les figures) sur lequel est montée une pompe (non représentée sur les dessins). La pompe est montée dans un renfoncement du réservoir destiné à accueillir la pompe, le réservoir comprenant un orifice au travers duquel un tube d'admission de la pompe est monté, avec un joint à l'interface entre le réservoir et la pompe au niveau de l'orifice pour assurer l'étanchéité de l'ensemble. La pompe est de manière classique une pompe standard comprenant par exemple un corps principal de forme tubulaire. Ce corps principal peut être composé d'une première partie de pompage et d'une seconde partie d'entraînement comprenant un moteur électrique. La première partie de pompage comprend un tube d'admission de liquide et un tube de refoulement de liquide afin de pouvoir recevoir du liquide de nettoyage du réservoir et de le refouler à une pression supérieure à la pression en entrée de pompe. Le tube d'admission de liquide peut être placé à une extrémité libre de la première partie de pompage et être coaxial avec le corps principal de la pompe en partageant avec ce dernier le même axe de révolution. La seconde partie de refoulement peut s'étendre à partir de la première partie de pompage dans une direction perpendiculaire à l'axe de révolution du corps principal.

La seconde partie d'entraînement peut être située au-dessus de la première partie de pompage et comprendre un moteur électrique et, à son extrémité libre, un connecteur permettant de connecter la pompe à une source d'alimentation électrique.

Plusieurs buses de nettoyage 2 et 4 peuvent être mises en place et sont situées à l'autre extrémité du dispositif de nettoyage et destinées à être placée devant une surface du véhicule automobile à nettoyer afin d'y projeter du liquide de nettoyage pressurisé.

Le dispositif de nettoyage comprend en outre des tuyaux (ou canalisations) reliant les différents organes (pompe, buses de nettoyage 2 et 4, etc.) entre eux pour former un circuit de distribution fluidique.

Le dispositif de nettoyage comprend en outre un bloc de distribution de liquide de nettoyage 6 comprenant plusieurs vannes 8 (quatre représentées le cas présent). La pompe est configurée pour pomper le liquide de lavage du réservoir et l'envoyer vers le bloc de distribution 6 et les buses de nettoyage 2 et 4.

Les vannes 8 du bloc de distribution 6 sont configurées pour être reliées fluidiquement respectivement aux buses Au moins une buse, ici la buse 2, est reliée à plusieurs vannes, trois vannes sur la figure 1. Le nombre de buses reliées à plusieurs vannes peut bien évidemment varier tout comme le nombre de vannes reliées à une buse.

Les vannes 8 sont configurées pour transmettre sélectivement le liquide de lavage pompé vers les buses de nettoyage associées. Les vannes 8 sont par exemple des électrovannes utilisées de manière classique dans ce type dispositif de nettoyage. Les vannes 8 peuvent être disposées en parallèle, c'est-à-dire qu'elles sont toutes reliées à un canal fluidique du bloc de distribution 6. Ce canal fluidique est relié à une entrée du bloc de distribution 6 connectée à la pompe. Une sortie du bloc de distribution 6 peut quant à elle obturée par un capuchon. Alternativement, il est possible de prévoir un conduit de retour de liquide au réservoir avec une valve de surpression en sortie du bloc de distribution 6.

Les vannes 8 ont des débits sensiblement identiques. On retrouve ici la volonté de standardisation en utilisant des vannes ayant les mêmes spécifications ou des spécifications proches. A titre d'exemple, les vannes 8 ont des débits différant les uns des autres d'au maximum 5%. A titre d'exemple, les vannes 8 sont configurées pour avoir un débit métrique nominal de sortie compris entre 0,12 et 0,15 m³/h.

Ainsi, en fonctionnement, l'activation de la pompe permet de transmettre le liquide de lavage du réservoir vers le bloc de distribution 6 et vers les buses de nettoyage dont la ou les vannes 8 associée sont ouvertes.

Le bloc de distribution 6 est un bloc modulaire de sorte que le nombre de vannes 8 peut être facilement modifié pour s'adapter au nombre de buses de nettoyage ou à une configuration particulière du dispositif de nettoyage, par exemple en fonction du modèle du véhicule automobile si le dispositif de nettoyage est disposé sur un véhicule automobile. Différents blocs de distribution 6 peuvent également être combinés.

Concernant le procédé de nettoyage d'une surface par la buse 4, il s'agit d'une activation de la pompe, puis d'une ouverture de la vanne 8 pour une projection de liquide de nettoyage par la buse de nettoyage 4.

Concernant le procédé de nettoyage par la buse 2, la première étape est également une commande de marche de la pompe pour injecter le liquide de nettoyage contenu dans le réservoir jusqu'au bloc de distribution 6. Il est possible que les vannes 8 reliant la pompe à la buse 2 soient fermées, de manière à pressuriser le segment du circuit de distribution fluidique compris entre la pompe et le bloc de distribution 6 jusqu'à atteindre une pression maximale (il en est de même pour la buse 4). Cela crée un palier de compression du segment en amont du bloc de distribution 6 et permet ainsi de limiter les pertes de charges dans le circuit de distribution fluidique.

La seconde étape correspond à une commande d'ouverture de plusieurs des vannes reliées à la buse en fonction de la pression désirée en sortie de buse et lorsque la pression en entrée du bloc de distribution a atteint une pression prédéterminée (maximale, comme expliqué ci-dessus, ou intermédiaire). Le nombre de vannes 8 ouvertes peut varier en fonction de certains paramètres comme nous le verrons par la suite.

Le passage du liquide par plusieurs vannes 8 permet de minimiser les pertes de charge comme illustré sur la figure 2 représentant les pertes de charge (axe des ordonnées) en fonction du débit en entrée de vanne 8 (axe des abscisses). En effet, et pour des vannes utilisées de manière conventionnelles pour ce type d'applications, le débit de liquide en entrée de vanne lorsqu'une seule vanne est utilisée est d'environ 30 millilitres par seconde. La perte de charge est dès lors d'environ 0,9 bar comme cela peut être constaté par le point 12 sur la courbe de la figure 2.

A contrario, quand par exemple trois vannes sont ouvertes pour faire passer la même quantité de liquide dans les mêmes conditions, ce dernier se réparti entre les trois vannes et le débit d'entrée dans chaque vanne est divisé par trois pour passer à 10 millilitres par seconde. La perte de charge est dès lors d'environ 0,1 bar comme cela peut être constaté par le point 10 sur la courbe de la figure 2. Cela permet donc de diminuer très fortement les pertes de charge lors du passage du bloc de distribution 6.

Le fait de moduler le nombre de vannes reliées à une buse et le nombre de vannes ouvertes permet de moduler la pression en sortie du bloc de distribution et ainsi de moduler la pression en sortie de buses, par exemple pour avoir la pression la plus élevée possible en sortie de buse. Il est également possible d'envisager plusieurs modes de nettoyage d'une surface, par exemple en fonction du degré de salissure de cette dernière, en faisant varier le nombre de vannes 8 ouvertes. Ainsi, en ouvrant plus ou moins de vannes 8 reliées à la buse 2, la pression en sortie de buse 2 serait différente ce qui correspondrait à des modes de lavage différents.

Le liquide de nettoyage peut ainsi parvenir jusqu'à la buse 2 et être projeté sur une surface à nettoyer.

Selon l'invention, le nombre de vannes 8 ouvertes est fonction de la distance entre la buse 2 reliée à plusieurs vannes 8 et le bloc de distribution 6. En effet, et pour éviter les pertes de charge pour une buse, par exemple la buse 2, éloignée du bloc de distribution 6, il est possible de lui affecter un nombre important de vannes 8 et de toutes les ouvrir pour limiter au maximum les pertes de charge le long du circuit de distribution fluidique comme expliqué ci-dessus avec une répartition du liquide de nettoyage entre les vannes 8. Il est donc possible d'avoir plusieurs buses situées à différentes distances du bloc de distribution fluidique 6, chaque buse étant reliée à un nombre différent de vannes 8 en fonction de sa distance. Par exemple, la buse 4, reliée à une seule vanne 8, peut dès lors être plus proche du bloc de distribution 6 que la buse 2 reliée à trois vannes 8 pour laquelle les pertes de charge potentielles sont plus importantes.

Il est également possible que le nombre de vannes 8 ouvertes est fonction de la température environnante. En effet, une température plus basse conduit à une augmentation des pertes de charge. Par conséquent, il est possible d'ouvrir un plus grand nombre de vannes lorsque la température est plus basse pour s'assurer de minimiser au maximum les pertes de charge.

Il est également possible que toutes les vannes 8 soient ouvertes lors de la commande d'ouverture des vannes 8 reliées à la buse 2. On obtient ainsi une pression maximale en sortie de buse 2. Comme expliqué plus haut, il est possible d'ouvrir seulement une partie des vannes 8 reliées à la buse 2, par exemple pour les raisons évoquées ci-dessus.

Le dispositif de nettoyage peut comprendre une unité de pilotage connectée au bloc de distribution 6 et configurée pour commander l'ouverture et la fermeture de l'ensemble des vannes 8. Cela permet de centraliser ces commandes et de permettre la mise en place des différentes cinématiques d'ouvertures décrites plus haut.

L'unité de pilotage peut commander l'ouverture d'un nombre de vannes 8 différent en fonction de la pression désirée en sortie de buse de nettoyage. On a ici la matérialisation des différentes possibilités d'ouvertures de vannes 8 du bloc de distribution 6.

Comme expliqué plus haut, le dispositif de nettoyage peut comporter plusieurs buses, chaque buse étant reliée à un ensemble de vannes 8, le procédé comprenant une commande d'ouverture de plusieurs vannes 8 de chaque ensemble de vannes après l'étape de commande de marche de la pompe pour injecter le liquide de nettoyage contenu dans le réservoir jusqu'au bloc de distribution 6. Le nombre de vannes 8 reliées à une buse peut être différent, notamment en fonction des paramètres vus ci-dessus (distance entre la buse et le bloc de distribution 6, capacité de mise en œuvre de plusieurs modes de lavage, etc.).

### Liste de références

2, 4 : buses de nettoyage
6 : bloc de distribution de liquide de nettoyage
8 : vannes
10 : point illustrant les pertes de charge pour un débit entrant de 10 mL/s
12 : point illustrant les pertes de charge pour un débit entrant de 30 mL/s

## Revendications

1. Procédé de nettoyage de surfaces de véhicule automobile à l'aide d'un dispositif de nettoyage comprenant un réservoir de liquide de nettoyage, au moins une buse (2) pour projeter le liquide de nettoyage, un circuit de distribution fluidique agencé pour acheminer du liquide de nettoyage du réservoir vers la buse (2) de nettoyage et une pompe agencée pour injecter le liquide de nettoyage contenu dans le réservoir dans le circuit de distribution fluidique, le circuit de distribution fluidique comprenant un bloc de distribution (6) de liquide de nettoyage comprenant plusieurs vannes (8) ayant des débits sensiblement identiques, la buse (2) étant reliée à plusieurs vannes (8) du bloc de distribution (6), le procédé étant **caractérisé en ce qu'**il comprend les étapes suivantes :
- commande de marche de la pompe pour injecter le liquide de nettoyage contenu dans le réservoir jusqu'au bloc de distribution (6),
- commande d'ouverture de plusieurs des vannes (8) reliées à la buse (2) en fonction de la pression désirée en sortie de buse (2) et lorsque la pression en entrée du bloc de distribution (6) a atteint une pression prédéterminée, le nombre de vannes ouvertes étant fonction de la distance entre la buse (2) reliée à plusieurs vannes (8) et le bloc de distribution, et
- projection de liquide de nettoyage depuis la buse (2) sur une surface à nettoyer.

2. Procédé de nettoyage selon la revendication 1, dans lequel le nombre de vannes (8) ouvertes est fonction de la température environnante.

3. Procédé de nettoyage selon l'une quelconque des revendications précédentes, dans lequel toutes les vannes (8) sont ouvertes lors de la commande d'ouverture des vannes (8) reliées à la buse (2).

4. Procédé de nettoyage selon l'une quelconque des revendications précédentes, comprenant en outre les étapes suivantes :
- activation de la pompe, les vannes (8) étant fermées, et
- ouverture des vannes (8).

5. Procédé de nettoyage selon l'une quelconque des revendications précédentes, le dispositif de nettoyage comprenant une unité de pilotage connectée au bloc de distribution (6) et configurée pour commander l'ouverture et la fermeture de l'ensemble des vannes (8).

6. Procédé de nettoyage selon la revendication 5 en combinaison avec la revendication 2, dans lequel l'unité de pilotage commande l'ouverture d'un nombre de vannes (8) différent en fonction de la pression désirée en sortie de buse (2) de nettoyage.

7. Procédé de nettoyage selon l'une quelconque des revendications précédentes, dans lequel le dispositif comprend plusieurs buses chacune de laquelle étant reliée à un ensemble de vannes (8), le procédé comprenant une commande d'ouverture de plusieurs vannes (8) de chaque ensemble de vannes (8) après l'étape de commande de marche de la pompe pour injecter le liquide de nettoyage contenu dans le réservoir jusqu'au bloc de distribution (6).

8. Procédé de nettoyage selon l'une quelconque des revendications précédentes, dans lequel les vannes (8) sont configurées pour avoir un débit métrique de sortie compris entre 0,12 et 0,15 m³/h.

9. Procédé de nettoyage selon l'une quelconque des revendications précédentes, dans lequel les vannes (8) sont des électrovannes.

## Patentansprüche

1. Verfahren zur Reinigung von Kraftfahrzeugoberflächen unter Verwendung einer Reinigungsvorrichtung, umfassend einen Behälter für Reinigungsflüssigkeit, mindestens eine Düse (2) zum Sprühen der Reinigungsflüssigkeit, einen Fluidverteilungskreislauf, der dazu ausgelegt ist, die Reinigungsflüssigkeit von dem Behälter zu der Reinigungsdüse (2) zu fördern, und eine Pumpe, die dazu ausgelegt ist, die im Behälter enthaltene Reinigungsflüssigkeit in den Fluidverteilungskreislauf zu injizieren, wobei der Fluidverteilungskreislauf einen Reinigungsflüssigkeits-Verteilerblock (6) umfasst, der mehrere Ventile (8) mit im Wesentlichen identischen Durchflussraten aufweist, wobei die Düse (2) mit mehreren Ventilen (8) des Verteilerblocks (6) verbunden ist, wobei das Verfahren **dadurch gekennzeichnet ist, dass** es die folgenden Schritte umfasst:
- Ansteuern des Betriebs der Pumpe, um die im Behälter enthaltene Reinigungsflüssigkeit bis zum Verteilerblock (6) zu injizieren,
- Ansteuern des Öffnens mehrerer der mit der Düse (2) verbundenen Ventile (8) entsprechend dem gewünschten Druck am Auslass der Düse (2) und, wenn der Druck am Einlass des Verteilerblocks (6) einen vorbestimmten Druck erreicht hat, wobei die Anzahl der geöffneten Ventile (8) von dem Abstand zwischen der Düse (2), die mit mehreren Ventilen (8) verbunden ist, und dem Verteilerblock abhängt, und
- Sprühen von Reinigungsflüssigkeit aus der Düse (2) auf eine zu reinigende Oberfläche.

2. Das Reinigungsverfahren nach Anspruch 1, wobei die Anzahl der geöffneten Ventile (8) von der Umgebungstemperatur abhängt.

3. Das Reinigungsverfahren nach einem der vorhergehenden Ansprüche, wobei alle Ventile (8) auf den Befehl zum Öffnen der mit der Düse (2) verbundenen Ventile (8) hin geöffnet werden.

4. Das Reinigungsverfahren nach einem der vorhergehenden Ansprüche, ferner umfassend die folgenden Schritte:
- Aktivieren der Pumpe bei geschlossenen Ventilen (8), und
- Öffnen der Ventile (8).

5. Das Reinigungsverfahren nach einem der vorhergehenden Ansprüche, wobei die Reinigungsvorrichtung eine Steuereinheit umfasst, die mit dem Verteilerblock (6) verbunden und dazu konfiguriert ist, das Öffnen und Schließen des Satzes von Ventilen (8) zu steuern.

6. Das Reinigungsverfahren nach Anspruch 5 in Kombination mit Anspruch 2, wobei die Steuereinheit das Öffnen einer Anzahl von Ventilen (8) steuert, die sich entsprechend dem gewünschten Druck am Auslass der Reinigungsdüse (2) unterscheidet.

7. Das Reinigungsverfahren nach einem der vorhergehenden Ansprüche, wobei die Vorrichtung mehrere Düsen umfasst, von denen jede mit einem Satz von Ventilen (8) verbunden ist, wobei das Verfahren einen Befehl zum Öffnen mehrerer Ventile (8) jedes Satzes von Ventilen (8) nach dem Schritt des Ansteuerns des Betriebs der Pumpe umfasst, um die im Behälter enthaltene Reinigungsflüssigkeit bis zum Verteilerblock (6) zu injizieren.

8. Das Reinigungsverfahren nach einem der vorhergehenden Ansprüche, wobei die Ventile (8) so konfiguriert sind, dass sie eine Auslass-Volumenstromrate zwischen 0,12 und 0,15 m³/h aufweisen.

9. Das Reinigungsverfahren nach einem der vorhergehenden Ansprüche, wobei die Ventile (8) Magnetventile sind.

## Claims

1. A method for cleaning motor vehicle surfaces using a cleaning device comprising a reservoir of cleaning liquid, at least one nozzle (2) for spraying the cleaning liquid, a fluid distribution circuit designed to convey the cleaning liquid from the reservoir to the cleaning nozzle (2) and a pump designed to inject the cleaning liquid contained in the reservoir into the fluid distribution circuit, the fluid distribution circuit comprising a cleaning liquid distribution block (6) comprising several valves (8) having substantially identical flow rates, the nozzle (2) being connected to several valves (8) of the distribution block (6), the method being **characterized in that** it comprises the following steps:
- commanding operation of the pump to inject the cleaning liquid contained in the reservoir as far as the distribution block (6),
- commanding the opening of several of the valves (8) connected to the nozzle (2) according to the desired pressure at the outlet of the nozzle (2) and when the pressure at the inlet of the distribution block (6) has reached a predetermined pressure, the number of valves (8) opened is dependent on the distance between the nozzle (2) that is connected to several valves (8) and the distribution block and
- spraying cleaning liquid from the nozzle (2) onto a surface that is to be cleaned.

2. The cleaning method as claimed in claim 1, wherein the number of valves (8) opened is dependent on the surrounding temperature.

3. The cleaning method as claimed in any one of the preceding claims, wherein all the valves (8) are opened upon the command to open the valves (8) connected to the nozzle (2).

4. The cleaning method as claimed in any one of the preceding claims, further comprising the following steps of:
- activating the pump, with the valves (8) closed, and
- opening the valves (8).

5. The cleaning method as claimed in any one of the preceding claims, the cleaning device comprising a control unit connected to the distribution block (6) and configured to command the opening and closing of the set of valves (8).

6. The cleaning method as claimed in claim 5 in combination with claim 2, wherein the control unit commands the opening of a number of valves (8) that differs according to the desired pressure at the outlet of the cleaning nozzle (2).

7. The cleaning method as claimed in any one of the preceding claims, wherein the device comprise several nozzles each which being connected to a set of valves (8), the method comprising a command to open several valves (8) of each set of valves (8) after the step of commanding operation of the pump in order to inject the cleaning liquid contained in the reservoir as far as the distribution block (6).

8. The cleaning method as claimed in any one of the preceding claims, wherein the valves (8) are configured to have an outlet metric flow rate of between 0.12 and 0.15 m³/h.

9. The cleaning method as claimed in any one of the preceding claims, wherein the valves (8) are solenoid valves.
